# EUROPEAN PATENT SPECIFICATION

(11) **EP 3 391 626 B1**
(45) Date of publication and mention of the grant of the patent: **25.03.2020**
(21) Application number: 16798811.2
(22) Date of filing: 20.10.2016
(51) Int. Cl.: H04L 29/12, H04L 29/06, H04L 29/08

(54) **PROXY SERVER SELECTION BASED ON SECURITY POLICY**
PROXY-SERVER-AUSWAHL BASIERT AUF SICHERHEITSPOLITIK
SÉLECTION DU SERVEUR PROXY BASÉ SUR LA POLITIQUE DE SÉCURITÉ

(30) Priority: 20.10.2015 US 201562243705 P
(43) Date of publication of application: 24.10.2018
(73) Proprietor: Symantec Corporation, Mountain View, CA 94043 (US)
(72) Inventor: AMIGA, Dan, 46320 Herzliya (IL); GUZNER, Guy, 6560106 Tel-Aviv (IL)
(74) Representative: Dilg, Haeusler, Schindelmann Patentanwaltsgesellschaft mbH
(86) International application number: PCT/IB2016/056317
(87) International publication number: WO 2017/068526

(56) References cited:
- US-A1- 2009 157 889
- HARDAKER PARSONS W ET AL: "Anonymizing and privatizing requests and responses in the DNS; draft-hardaker-dnse-split-key-dns-00.txt", ANONYMIZING AND PRIVATIZING REQUESTS AND RESPONSES IN THE DNS; DRAFT-HARDAKER-DNSE-SPLIT-KEY-DNS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 1 April 2014 (2014-04-01), pages 1-6, XP015098476, [retrieved on 2014-04-01]
- Anonymous: "Proxy auto-config - Wikipedia", , 21 September 2015 (2015-09-21), pages 1-5, XP055345451, Retrieved from the Internet: URL:https://en.wikipedia.org/w/index.php?t itle=Proxy_auto-config&oldid=682022870 [retrieved on 2017-02-14]
- "PROXY CLIENT AUTOCONFIG FILE FORMAT", INTERNET CITATION, March 1996 (1996-03), XP002126732, Retrieved from the Internet: URL:http://home.netscape.com/eng/mozilla/2 .0/relnotes/demo/proxy-live.html [retrieved on 1999-12-28]

## Description

### BACKGROUND

Organizations often implement computer-based measures to control the types of computer network resources that their computer users may access. This is often done by monitoring requests made by a computer-user's computer, such as when a web browser requests access to a website, and forwarding the request to a policy server which analyzes the content of the request and applies predefined policies to the request content to determine whether or not the request should be allowed to proceed. Increasingly, cryptographic protocols, such as the Transport Layer Security (TLS) and Secure Sockets Layer (SSL) protocols, are employed to that encrypt such requests and thus prevent their encrypted contents from being analyzed by such policy servers. One solution to this problem is a technique known as SSL Man In The Middle (MITM), but it is labor- and resource-intensive, and often cannot be implemented due to privacy and legal issues.

HARDAKER PARSONS W ET AL, "Anonymizing and privatizing requests and responses in the DNS", 1 April 2014, discusses the type of architecture necessary to make DNS requests not just private between parties, but functionally anonymous so that the only entity that knows who made the request is the source entity itself.

US 2009/0157889 A1 discusses per-request control of DNS behaviour.

"Proxy auto-config - Wikipedia", URL: "https://en.wikipedia.org/w/index.php? title=Proxy_auto-config&oldid=682022870", retrieved 14 February 2017, discusses proxy auto-config (PAC) files which define how web browsers and other user agents can automatically choose the appropriate proxy server (access method) for fetching a given URL.

"PROXY CLIENT AUTOCONFIG FILE FORMAT", URL: http://home.netscape.com/eng/mozilla/2.0/relnotes/demo/proxy-live.html, retrieved 28 December 1999 describes a proxy client auto-config file format.

### SUMMARY

The invention is carried out according to the appended claims.

### BRIEF DESCRIPTION OF THE DRAWINGS

Aspects of the invention will be understood and appreciated more fully from the following detailed description taken in conjunction with the appended drawings in which:
Fig. 1A is a simplified conceptual illustration of a system for processing computer network requests, constructed and operative in accordance with an embodiment of the invention;
Fig. 1B is a simplified conceptual illustration of a system for processing computer network requests, constructed and operative in accordance with an alternative embodiment of the invention;
Fig. 2A is a simplified flowchart illustration of an exemplary method of operation of the system of Fig. 1A, operative in accordance with various embodiments of the invention; and
Fig. 2B is a simplified flowchart illustration of an exemplary method of operation of the system of Fig. 1B, operative in accordance with various embodiments of the invention.

### DETAILED DESCRIPTION

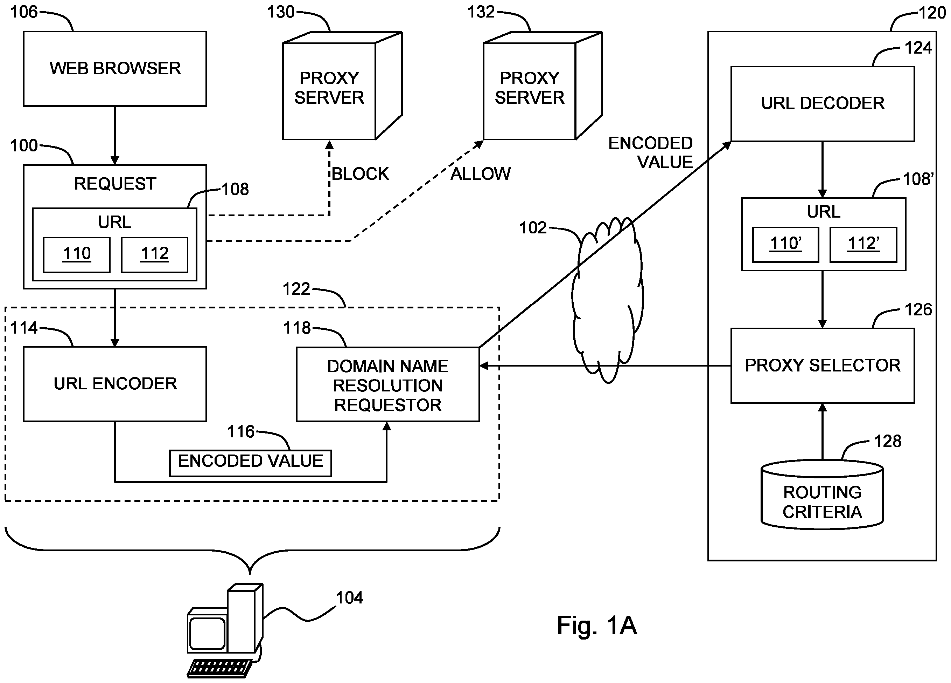

Reference is now made to Fig. 1A, which is a simplified conceptual illustration of a system for processing computer network requests, constructed and operative in accordance with an embodiment of the invention. In the system of Fig. 1A, a request 100 to access a resource via a computer network 102, such as an internal company network and/or the Internet, is identified on a computer 104 in accordance with conventional techniques. Request 100, such as a request made by a web browser 106 running on computer 104, includes a Uniform Resource Locator (URL) 108 that specifies the location of the resource on computer network 102, where URL 108 has a host portion 110, as well as one or more non-host portions collectively referred to herein as non-host portion 112, where host portion 110 together with non-host portion 112 constitute the entirety of URL 108. For example, in the URL 'https://www.amazon.com/clouddrive/home,' 'www.amazon.com' is the host portion, and 'https://' and '/clouddrive/home' are non-host portions, where URL 106 conforms to the syntax of a generic Uniform Resource Identifier (URI) of the form:

```
          scheme:[//[user:password@]host[:port]][/]path[?query] [#fragment]
```

where the non-host portion 112 includes any scheme, user, password, port, path, query, and fragment portions of URL 108.

A URL encoder 114 is configured to encode URL 108, including its host portion 110 and non-host portion 112, into an encoded value 116 having a valid domain name syntax, such as is described in appear in RFC 1035, RFC 1123, and RFC 2181 of The Internet Engineering Task Force (IETF) of the Internet Society (ISOC), Fremont, CA. URL encoder 114 is configured to encode URL 108 into encoded value 116 using any encoding technique that allows for full recovery of URL 108, including its host portion 110 and non-host portion 112, by applying a complementary decoding technique to encoded value 116. Where encoding URL 108 into a single encoded value 116 would cause the length of encoded value 116 to exceed the maximum length that a valid domain name may have, such as more than 253 characters in its textual representation, URL encoder 114 is configured to encode URL 108 into multiple encoded values 116, each having a valid domain name syntax and not exceeding the maximum length, and each preferably including one or more indicators that indicate that the encoded value 116 is one of a group of encoded values 116 into which URL 108 is encoded, as well the sequence of encoded value 116 within the group of encoded values 116, such as where each encoded value includes 'part_*n*_of_*m*' where *n* indicates the sequence number and *m* indicates the number of encoded values 116 into which URL 108 is encoded. URL encoder 114 is configured to encode URL 108 into such multiple encoded values 116 using any encoding technique that allows for full recovery of URL 108, including its host portion 110 and non-host portion 112, by applying a complementary decoding technique to the multiple encoded values 116.

A domain name resolution requestor 118 sends encoded value 116 in a domain name resolution request to a server 120. Where URL 108 is encoded into multiple encoded values 116, domain name resolution requestor 118 sends the multiple encoded values 116 in corresponding multiple domain name resolution requests to server 120.

In one embodiment URL encoder 114 and domain name resolution requestor 118 are implemented as software instructions within a proxy auto-configuration (PAC) file 122 with which computer 104 is configured. URL encoder 114 may, for example, be implemented using the JAVASCRIPT instruction

```
 var encodedUrl = encode64(url).replace("=","-1-") + ".com"
```

while domain name resolution requestor 118 may, for example, be implemented using the JAVASCRIPT instruction

```
             var resolvedIp = dnsResolve(encodedUrl);
```

where encoded value 116 is sent to server 120 by invoking the dnsResolve method using encoded value 116 as a parameter of the dnsResolve method. Where URL 108 is encoded into multiple encoded values 116, the dnsResolve method is invoked multiple times, each time using a different one of the encoded values as a parameter of the dnsResolve method.

At server 120, a URL decoder 124 is configured to receive one or more encoded values associated with a URL, such as URL 108, in one or more domain name resolution requests as described above, and decode the encoded values into a URL 108' by applying decoding techniques that are complementary to the techniques used to create the encoded values, where URL 108' includes all host and non-host portions 110' and 112' that URL 108' included prior to its encoding as described above. A proxy selector 126 is configured to determine whether host portion 110' of URL 108' in combination with non-host portion 112' of URL 108' meets one or more predefined routing criteria 128 associated with a computer network address at a proxy server 130, and then send the computer network address in response to the domain name resolution request(s), such as to domain name resolution requestor 118. In one embodiment, different routing criteria 128 are associated with different computer network addresses at one or more proxy servers, where each computer network address is associated with a different predefined policy that its associated proxy server is configured to apply to requests that are received at the computer network address. Such policies may, for example, include security policies, where requests from users are allowed or blocked, such as based on the identity of the requestors and/or on the requested resource; throttling policies; and logging policies. Thus, for example, proxy server 130 at IP address 111.111.111.111 is configured to block all requests that it receives, such as by returning a predefined web page that is other than a requested web page, whereas a proxy server 132 at IP address 222.222.222.222 is configured to allow all requests that it receives to proceed, such as by passing such requests through to their originally-intended destinations.

Domain name resolution requestor 118 is configured, in accordance with conventional techniques, to receive computer network addresses in response to its domain name resolution requests, whereupon any computer network resource access requests whose URLs were processed as described hereinabove, such as request 100, are sent to the computer network addresses at their specified proxy servers which the process the requests by applying the predefined policies associated with the computer network addresses as described hereinabove. Where request 100 is configured to be sent using a cryptographic protocol, such as TLS or SSL, the proxy server that receives request 100 is nevertheless able to apply the predefined policy associated with the computer network address at which request 100 is received even though the proxy server is not able to peer into the encrypted contents or request 100.

In one embodiment, where URL 108 matches a predefined pattern to which a predefined policy is to be applied as described hereinabove with reference to predefined routing criteria 128, URL encoder 114 employs a dictionary to encode URL 108 into encoded value 116 using a predefined representative value. For example, in the following generated dictionary:

```
    var generatedRulesDictionary = [{
          host : 'www.linkedin.com',
          regex: "/www.linkedin.com/messages[0-9]*'/,
          query: '1.fg.com'
    }];
```

where URL 108 matches the indicated pattern it will be encoded into encoded value 116 using '1.fg.com', which is then sent in a domain name resolution request to a server 120, whereupon proxy selector 126 applies predefined routing criteria 128 to '1.fg.com' as described hereinabove.

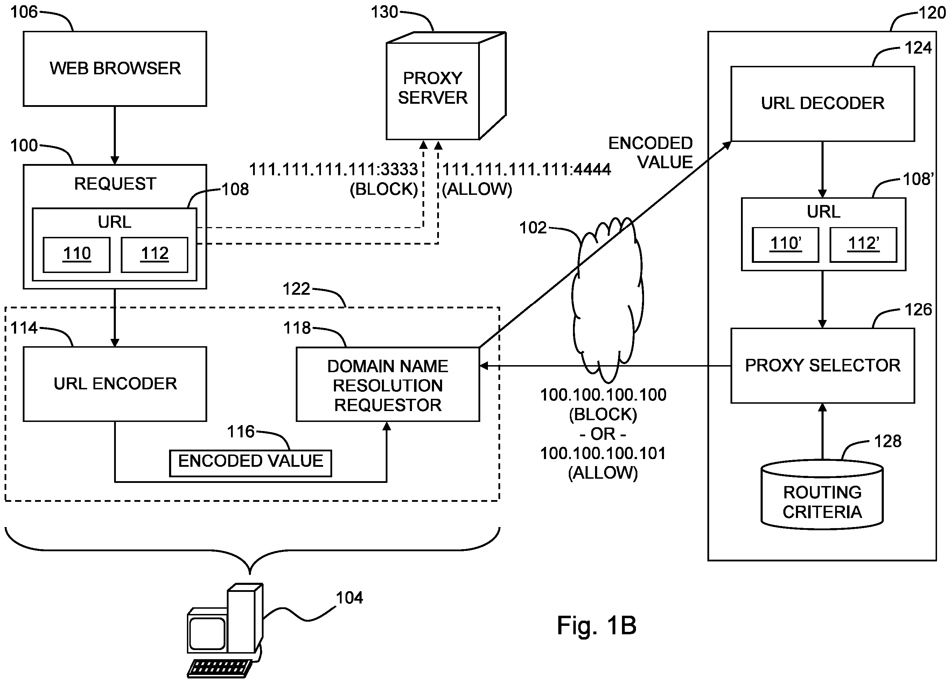

In one embodiment, as shown in Fig. 1B, different routing criteria 128 are associated with different alias computer network addresses that represent destination computer network addresses and ports at one or more proxy servers. Thus, for example, alias IP address 100.100.100.100 represents proxy server 130 at destination IP address 111.111.111.111 port 3333 that is configured to block all requests that it receives, such as by returning a predefined web page that is other than a requested web page, whereas alias IP address 100.100.100.101 represents proxy server 130 at destination IP address 111.111.111.111 port 4444 is configured to allow all requests that it receives to proceed, such as by passing such requests through to their originally-intended destinations. In this embodiment, domain name resolution requestor 118 may, for example, be implemented in the aforementioned PAC file using the JAVASCRIPT instructions

```
    var resolvedIp = dnsResolve(encodedUrl);
    if (resolvedIp == '100.100.100.100') {
          return "PROXY 111.111.111.111:3333;"; // block
    } else if (resolvedIp == '100.100.100.101') {
          return "PROXY 111.111.111.111:4444;"; // allow }
```

Any of the elements shown in Figs. 1A and 1B are preferably implemented in computer hardware and/or in computer software embodied in a non-transitory, computer-readable medium in accordance with conventional techniques.

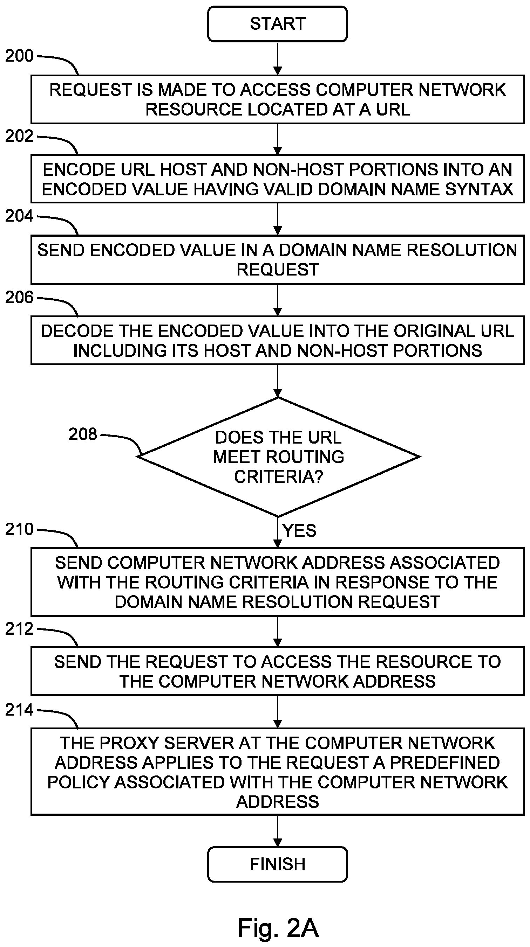

Reference is now made to Fig. 2A, which is a simplified flowchart illustration of an exemplary method of operation of the system of Fig. 1A, operative in accordance with an embodiment of the invention. In the method of Fig. 2A, a request is made on a computer to access a resource via a computer network, where the request includes a Uniform Resource Locator (URL) that specifies the location of the resource on the computer network (step 200). The URL, including its host and non-host portions, is encoded into an encoded value having a valid domain name syntax (step 202). The encoded value is sent in a domain name resolution request to a server (step 204), such as by invoking a dnsResolve method of a proxy auto-configuration (PAC) file in which encoded value is used as a parameter of the dnsResolve method. At the server, the encoded value is decoded into the URL, including its host and non-host portions (step 206), using a decoding technique that is complementary to the technique used to create the encoded value. If the URL, including its host and non-host portions, meets predefined routing criteria associated with a computer network address at a proxy server that is configured to apply a predefined policy to requests that are received at the computer network address (step 208), the computer network address is sent to the computer in response to the domain name resolution request (step 210). The request to access the resource is sent to the computer network addresses at the proxy server (step 212), which processes the request by applying the predefined policy associated with the computer network address (step 214), whether or not the request was sent using a cryptographic protocol.

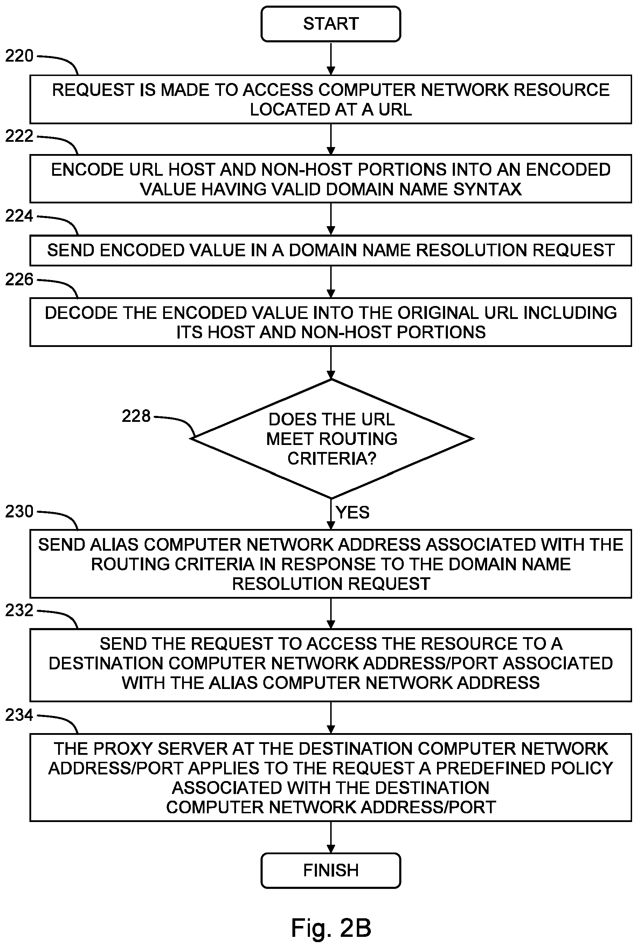

Reference is now made to Fig. 2B, which is a simplified flowchart illustration of an exemplary method of operation of the system of Fig. 1B, operative in accordance with an embodiment of the invention. In the method of Fig. 2B, a request is made on a computer to access a resource via a computer network, where the request includes a Uniform Resource Locator (URL) that specifies the location of the resource on the computer network (step 220). The URL, including its host and non-host portions, is encoded into an encoded value having a valid domain name syntax (step 222). The encoded value is sent in a domain name resolution request to a server (step 224), such as by invoking a dnsResolve method of a proxy auto-configuration (PAC) file in which encoded value is used as a parameter of the dnsResolve method. At the server, the encoded value is decoded into the URL, including its host and non-host portions (step 226), using a decoding technique that is complementary to the technique used to create the encoded value. If the URL, including its host and non-host portions, meets predefined routing criteria associated with an alias computer network address that is associated with a destination computer network address and port at a proxy server that is configured to apply a predefined policy to requests that are received at the destination computer network address and port (step 228), the alias computer network address is sent to the computer in response to the domain name resolution request (step 230) where the alias computer network address is replaced with its associated destination computer network address and port. The request to access the resource is sent to the destination computer network addresses and port at the proxy server (step 232), which processes the request by applying the predefined policy associated with the computer network address and port (step 234), whether or not the request was sent using a cryptographic protocol.

It is to be appreciated that the term "processor" as used herein is intended to include any processing device, such as, for example, one that includes a CPU (central processing unit) and/or other processing circuitry. It is also to be understood that the term "processor" may refer to more than one processing device and that various elements associated with a processing device may be shared by other processing devices.

The term "memory" as used herein is intended to include memory associated with a processor or CPU, such as, for example, RAM, ROM, a fixed memory device (e.g., hard drive), a removable memory device (e.g., diskette), flash memory, etc. Such memory may be considered a computer readable storage medium.

In addition, the phrase "input/output devices" or "I/O devices" as used herein is intended to include, for example, one or more input devices (e.g., keyboard, mouse, scanner, etc.) for entering data to the processing unit, and/or one or more output devices (e.g., speaker, display, printer, etc.) for presenting results associated with the processing unit.

Embodiments of the invention may include a system, a method, and/or a computer program product. The computer program product may include a computer readable storage medium (or media) having computer readable program instructions thereon for causing a processor to carry out aspects of the invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the invention.

Aspects of the invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments of the invention have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

## Claims

1. A method for processing computer network requests, the method comprising:
receiving from a requesting computer (122) an encoded value (116) in a domain name resolution request, wherein the encoded value has a valid domain name syntax;
decoding the encoded value into a Uniform Resource Locator (108') having a host portion and a non-host portion;
identifying routing criteria (128) matching a combination of the host portion of the Uniform Resource Locator and the non-host portion of the Uniform Resource Locator, wherein the routing criteria are associated with a computer network address of a proxy server, and wherein the computer network address is associated with a security policy to apply to communications directed to the proxy server; and
sending the computer network address of the proxy server to the requesting computer in response to the domain name resolution request to route packets directed to the Uniform Resource Locator to the proxy server and apply the associated security policy to the routed packets.

2. The method according to claim 1 and further comprising configuring the requesting computer to
encode into the encoded value the Uniform Resource Locator having the host portion and the non-host portion, wherein the encoded value has a valid domain name syntax, and
send the encoded value in the domain name resolution request.

3. The method according to claim 2 and further comprising configuring the requesting computer to
receive the computer network address in response to the domain name resolution request, and
send a computer network resource access request to the computer network address, wherein the computer network resource access request includes the Uniform Resource Locator having the host portion and the non-host portion.

4. The method according to claim 2 and further comprising configuring the requesting computer to
receive the computer network address in response to the domain name resolution request, and
send a computer network resource access request to a destination computer network address and port associated with the computer network address received in response to the domain name resolution request, wherein the computer network resource access request includes the Uniform Resource Locator having the host portion and the non-host portion.

5. The method according to claim 2 and further comprising configuring the requesting computer to send the encoded value by invoking a dnsResolve method of a proxy auto-configuration file using the encoded value as a parameter of the dnsResolve method.

6. The method according to claim 5 and further comprising configuring the proxy auto-configuration file with software instructions for encoding the Uniform Resource Locator.

7. The method according to claim 1 and further comprising configuring the proxy server to block requests received at the computer network address.

8. The method according to claim 4 and further comprising configuring the proxy server to block requests received at the destination computer network address and port.

9. The method according to claim 1 and further comprising configuring the requesting computer to
encode into a plurality of encoded values a Uniform Resource Locator having a host portion and a non-host portion, wherein each of the encoded values has a valid domain name syntax, and
send the encoded values in a plurality of domain name resolution requests.

10. The method according to claim 9 and further comprising configuring the requesting computer to send the plurality of encoded values by invoking, for each of the plurality of encoded values, a dnsResolve method of a proxy auto-configuration file using the encoded value as a parameter of the dnsResolve method, wherein the invoking is performed a plurality of times corresponding to the plurality of encoded values.

11. The method according to claim 9 wherein
the receiving from the requesting computer comprises receiving the plurality of domain name resolution requests, and
the decoding comprises decoding the encoded values into the Uniform Resource Locator having the host portion and the non-host portion.

12. A system (120) for processing computer network requests, the system comprising:
a processor; and
a memory having instructions stored thereon which, when executed by the processor, perform an operation for processing the computer network requests, the operation comprising:
receiving from a requesting computer (122) an encoded value (116) in a domain name resolution request, wherein the encoded value has a valid domain name syntax;
decoding the encoded value into a Uniform Resource Locator (108') having a host portion and a non-host portion;
identifying routing criteria (128) matching a combination of the host portion of the Uniform Resource Locator and the non-host portion of the Uniform Resource Locator, wherein the routing criteria are associated with a computer network address of a proxy server, and wherein the computer network address is associated with a security policy to apply to communications directed to the proxy server; and
sending the computer network address of the proxy server to the requesting computer in response to the domain name resolution request to route packets directed to the Uniform Resource Locator to the proxy server and apply the associated security policy to the routed packets.

13. The system according to claim 12, wherein the requesting computer is configured to
encode into the encoded value the Uniform Resource Locator having the host portion and the non-host portion, wherein the encoded value has a valid domain name syntax, and
send the encoded value in the domain name resolution request.

14. The system according to claim 12 wherein the proxy server is configured to block requests received at the computer network address.

15. A non-transitory computer-readable medium having instructions stored thereon which, when executed on a processor, perform an operation for processing computer network requests, the operation comprising:
receiving from a requesting computer (122) an encoded value (116) in a domain name resolution request, wherein the encoded value has a valid domain name syntax;
decoding the encoded value into a Uniform Resource Locator (108') having a host portion and a non-host portion;
identifying routing criteria (128) matching a combination of the host portion of the Uniform Resource Locator and the non-host portion of the Uniform Resource Locator, wherein the routing criteria are associated with a computer network address of a proxy server, and wherein the computer network address is associated with a security policy to apply to communications directed to the proxy server; and
sending the computer network address of the proxy server to the requesting computer in response to the domain name resolution request to route packets directed to the Uniform Resource Locator to the proxy server and apply the associated security policy to the routed packets.

## Patentansprüche

1. Ein Verfahren zum Verarbeiten von Computer Netzwerk Anfragen, das Verfahren aufweisend:
Empfangen von einem anfragenden Computer (122) einen kodierten Wert (116) in einer Domänennamen Auflösung Anfrage, wobei der kodierte Wert eine gültige Domänennamen Syntax hat;
Dekodieren des kodierten Werts in einen einheitlichen Quellenweiser (108'), der
einen Host Anteil
und einen nicht-Host Anteil hat;
Identifizieren von Routing Kriterien (128), passend zu einer Kombination aus dem Host Anteil des einheitlichen Quellenweisers und aus dem nicht-Host Anteil des einheitlichen Quellenweisers, wobei die Routing Kriterien mit einer Computer Netzwerk Adresse eines Proxy Servers assoziiert sind, und wobei die Computer Netzwerk Adresse mit einer Sicherheitsrichtlinie assoziiert ist, zum Anwenden auf Kommunikationen die gerichtet sind an den Proxy Server; und
Senden der Computer Netzwerk Adresse des Proxy Servers an den anfragenden Computer als Antwort auf die Domänennamen Auflösung Anfrage, um zu leiten an den einheitlichen Quellenweiser gerichtete Pakete zu dem Proxy Server und anzuwenden die assoziierte Sicherheitsrichtline auf die geleiteten Pakete.

2. Das Verfahren gemäß Anspruch 1 und ferner aufweisend Konfigurieren des anfragenden Computers zum
Kodieren in den kodierten Wert den einheitlichen Quellenweiser, der den Host Anteil und den nicht-Host Anteil hat, wobei der kodierte Wert eine gültige Domänennamen Syntax hat, und
Senden des kodierten Wertes in der Domänennamen Auflösung Anfrage.

3. Das Verfahren gemäß Anspruch 2 und ferner aufweisend Konfigurieren des anfragenden Computers, zum
Empfangen der Computer Netzwerkadresse als Antwort auf die Domänennamen Auflösung Anfrage, und
Senden einer Computer Netzwerk Ressourcen Zugang Anfrage an die Computer Netzwerk Adresse, wobei die Computer Netzwerk Ressourcen Zugang Anfrage den einheitlichen Quellenweiser enthält, der den Host Anteil und den nicht-Host Anteil hat.

4. Das Verfahren gemäß Anspruch 2 und ferner aufweisend ein Konfigurieren des anfragenden Computers zum
Empfangen der Computer Netzwerk Adresse als Antwort auf die Domänennamen Auflösung Anfrage, und
Senden einer Computer Netzwerk Ressourcen Zugang Anfrage an eine Bestimmungs Computer Netzwerk Adresse und Schnittstelle, die mit der Computer Netzwerk Adresse assoziiert ist, welche empfangen wurde als Antwort auf die Domänennamen Auflösung Anfrage, wobei die Computer Netzwerk Ressourcen Zugang Anfrage den einheitlichen Quellenweiser enthält, der den Host Anteil und den nicht-Host Anteil hat.

5. Das Verfahren gemäß Anspruch 2 und ferner aufweisend ein Konfigurieren des anfragenden Computers, zum
Senden des kodierten Werts mittels Aufrufens eines dnsResolve Verfahrens einer Proxy Autokonfiguration Datei unter Verwenden des kodierten Werts als Parameter des dnsResolve Verfahrens.

6. Das Verfahren gemäß Anspruch 5 und ferner aufweisend ein Konfigurieren der Proxy Autokonfiguration Datei mit Software Anweisungen zum Kodieren des einheitlichen Quellenweisers.

7. Das Verfahren gemäß Anspruch 1 und ferner aufweisend ein Konfigurieren des Proxy Servers zum Blockieren von Anfragen, die an der Computer Netzwerk Adresse empfangen wurden.

8. Das Verfahren gemäß Anspruch 4 und ferner aufweisend ein Konfigurieren des Proxy Servers, um Anfragen zu blockieren, die an Bestimmungs Computer Netzwerk und Schnittstelle empfangen werden.

9. Das Verfahren gemäß Anspruch 1 und ferner aufweisend ein Konfigurieren des anfragenden Computers, zum
Kodieren in eine Mehrzahl von kodierten Werten einen einheitlichen Quellenweiser, der einen Host Anteil und einen nicht-Host Anteil hat, wobei jeder der kodierten Werte eine gültige Domänennamen Syntax hat, und
Senden der kodierten Werte in einer Mehrzahl von Domänennamen Auflösung Anfragen.

10. Das Verfahren gemäß Anspruch 9 und ferner aufweisend ein Konfigurieren des anfragenden Computers, zum Senden der Mehrzahl von kodierten Werten mittels Aufrufens, für jeden der Mehrzahl von kodierten Werten, eines dnsResolve Verfahrens einer Proxy Autokonfiguration Datei, welche nutzt den kodierten Wert als Parameter des dnsResolve Verfahrens, wobei das Aufrufen eine Mehrzahl von Malen ausgeführt wird, korrespondierend mit der Mehrzahl von kodierten Werten.

11. Das Verfahren gemäß Anspruch 9 wobei
das Empfangen von dem anfragenden Computer das Empfangen der Mehrzahl von Domänennamen Auflösung Anfragen aufweist, und
das Dekodieren aufweist das Dekodieren der kodierten Werte in den einheitlichen Quellenweiser, welcher den Host Anteil und den nicht-Host Anteil hat.

12. Ein System (120) zum Verarbeiten von Computer Netzwerk Anfragen, das System aufweisend:
einen Prozessor; und
einen Speicher, welcher Anweisungen darauf gespeichert hat, die, wenn sie vom Prozessor ausgeführt werden, ausführen eine Operation zum Verarbeiten von Computer Netzwerk Anfragen, die Operation aufweisend:
Empfangen von einem anfragenden Computer (122) einen kodierten Wert (116) in einer Domänennamen Auflösung Anfrage, wobei der kodierte Wert eine gültige Domänennamen Syntax hat;
Dekodieren des kodierten Werts in den einheitlichen Quellenweiser (108'),
welcher einen Host Anteil
und einen nicht-Host Anteil hat;
Identifizieren von Routing Kriterien (128), passend zu einer Kombination aus dem Host Anteil des einheitlichen Quellenweisers und aus dem nicht-Host Anteil des einheitlichen Quellenweiser, wobei die Routing Kriterien mit einer Computer Netzwerk Adresse eines Proxy Servers assoziiert sind, und wobei die Computer Netzwerk Adresse mit einer Sicherheitsrichtlinie assoziiert ist, zum Anwenden auf Kommunikationen die gerichtet sind an den Proxy Server; und
Senden der Computer Netzwerk Adresse des Proxy Servers an den anfragenden Computer als Antwort auf die Domänennamen Auflösung Anfrage, um zu leiten an den einheitlichen Quellenweiser gerichtete Pakete zu dem Proxy Server und anzuwenden die assoziierte Sicherheitsrichtline auf die geleiteten Pakete.

13. Das System gemäß Anspruch 12, wobei der anfragende Computer konfiguriert ist, um zu kodieren in den kodierten Wert den einheitlichen Quellenweiser, der den Host Anteil und den nicht-Host Anteil hat, wobei der kodierte Wert eine gültige Domänennamen Syntax hat, und um zu senden den kodierten Wert in der Domänennamen Auflösung Anfrage.

14. Das System gemäß Anspruch 12 wobei der Proxy Server konfiguriert ist zum Blockieren von Anfragen, die an der Computer Netzwerk Adresse empfangen werden.

15. Ein nicht-flüchtiges computerlesbares Medium, welches Anweisungen darauf gespeichert hat, welche, wenn sie auf einem Prozessor ausgeführt werden, durchführen eine Operation zum Verarbeiten von Computer Netzwerk Anfragen, die Operation aufweisend:
Empfangen eines kodierten Werts (116) von einem anfragenden Computer (122) in einer Domänennamen Auflösung Anfrage, wobei der kodierte Wert eine gültige Domänennamen Syntax hat;
Dekodieren der kodierten Werte in einen einheitlichen Quellenweiser (108'), welcher einen Host Anteil und einen nicht-Host Anteil hat;
Identifizieren von Routing Kriterien (128), passend zu einer Kombination aus dem Host Anteil des einheitlichen Quellenweisers und aus dem nicht-Host Anteil des einheitlichen Quellenweisers, wobei die Routing Kriterien mit einer Computer Netzwerk Adresse eines Proxy Servers assoziiert sind, und wobei die Computer Netzwerk Adresse mit einer Sicherheitsrichtlinie assoziiert ist, zum Anwenden von Kommunikationen die gerichtet sind an den Proxy Server; und
Senden der Computer Netzwerk Adresse des Proxy Servers an den anfragenden Computer als Antwort auf die Domänennamen Auflösung Anfrage, um zu leiten an den einheitlichen Quellenweiser gerichtete Pakete zu dem Proxy Server und anzuwenden die assoziierte Sicherheitsrichtline auf die geleiteten Pakete.

## Revendications

1. Procédé permettant de traiter des demandes de réseau informatique, le procédé comprenant :
la réception, en provenance d'un ordinateur demandeur (122), d'une valeur codée (116) dans une demande de résolution de nom de domaine, dans lequel la valeur codée a une syntaxe de nom de domaine valide ;
le décodage de la valeur codée dans une adresse URL (Uniform Resource Locator) (108') comportant une partie hôte et une partie non hôte ;
l'identification de critères d'acheminement (128) correspondant à une combinaison de la partie hôte de l'adresse URL et de la partie non hôte de l'adresse URL, dans lequel les critères d'acheminement sont associés à une adresse de réseau informatique d'un serveur proxy, et dans lequel l'adresse de réseau informatique est associée à une politique de sécurité à appliquer à des communications destinées au serveur proxy ; et
l'envoi de l'adresse de réseau informatique du serveur proxy à l'ordinateur demandeur en réponse à la demande de résolution de nom de domaine pour acheminer des paquets destinés à l'adresse URL vers le serveur proxy et appliquer la politique de sécurité associée aux paquets acheminés.

2. Procédé selon la revendication 1 et comprenant en outre la configuration de l'ordinateur demandeur pour
coder dans la valeur codée l'adresse URL comportant la partie hôte et la partie non hôte, dans lequel la valeur codée a une syntaxe de nom de domaine valide, et
envoyer la valeur codée dans la demande de résolution de nom de domaine.

3. Procédé selon la revendication 2 et comprenant en outre la configuration de l'ordinateur demandeur pour
recevoir l'adresse de réseau informatique en réponse à la demande de résolution de nom de domaine, et
envoyer une demande d'accès à une ressource de réseau informatique à l'adresse de réseau informatique, dans lequel la demande d'accès à une ressource de réseau informatique inclut l'adresse URL comportant la partie hôte et la partie non hôte.

4. Procédé selon la revendication 2 et comprenant en outre la configuration de l'ordinateur demandeur pour
recevoir l'adresse de réseau informatique en réponse à la demande de résolution de nom de domaine, et
envoyer une demande d'accès à une ressource de réseau informatique à une adresse et un port de réseau informatique de destination associés à l'adresse de réseau informatique reçue en réponse à la demande de résolution de nom de domaine, dans lequel la demande d'accès à une ressource de réseau informatique inclut l'adresse URL comportant la partie hôte et la partie non hôte.

5. Procédé selon la revendication 2 et comprenant en outre la configuration de l'ordinateur demandeur pour envoyer la valeur codée en invoquant un procédé de résolution DNS d'un fichier de configuration automatique de proxy utilisant la valeur codée comme paramètre du procédé de résolution DNS.

6. Procédé selon la revendication 5 et comprenant en outre la configuration du fichier de configuration automatique de proxy avec des instructions de logiciel pour coder l'adresse URL.

7. Procédé selon la revendication 1 et comprenant en outre la configuration du serveur proxy pour bloquer des demandes reçues à l'adresse de réseau informatique.

8. Procédé selon la revendication 4 et comprenant en outre la configuration du serveur proxy pour bloquer des demandes reçues à l'adresse et au port de réseau informatique de destination.

9. Procédé selon la revendication 1 et comprenant en outre la configuration de l'ordinateur demandeur pour
coder dans une pluralité de valeurs codées une adresse URL comportant une partie hôte et une partie non hôte, dans lequel chacune des valeurs codées a une syntaxe de nom de domaine valide, et
envoyer les valeurs codées dans une pluralité de demandes de résolution de nom de domaine.

10. Procédé selon la revendication 9 et comprenant en outre la configuration de l'ordinateur demandeur pour envoyer la pluralité de valeurs codées en invoquant, pour chacune de la pluralité de valeurs codées, un procédé de résolution DNS d'un fichier de configuration automatique de proxy utilisant la valeur codée comme paramètre du procédé de résolution DNS, dans lequel l'invocation est effectuée une pluralité de fois correspondant à la pluralité de valeurs codées.

11. Procédé selon la revendication 9 dans lequel
la réception en provenance de l'ordinateur demandeur comprend la réception de la pluralité de demandes de résolution de nom de domaine, et
le décodage comprend le décodage des valeurs codées dans l'adresse URL comportant la partie hôte et la partie non hôte.

12. Système (120) permettant de traiter des demandes de réseau informatique, le système comprenant :
un processeur, et
une mémoire ayant des instructions stockées dans celle-ci qui, lorsqu'elles sont exécutées par le processeur, effectuent une opération permettant de traiter les demandes de réseau informatique, l'opération comprenant :
la réception, en provenance d'un ordinateur demandeur (122), d'une valeur codée (116) dans une demande de résolution de nom de domaine, dans lequel la valeur codée a une syntaxe de nom de domaine valide ;
le décodage de la valeur codée dans une adresse URL (108') comportant une partie hôte et une partie non hôte ;
l'identification de critères d'acheminement (128) correspondant à une combinaison de la partie hôte de l'adresse URL et de la partie non hôte de l'adresse URL, dans lequel les critères d'acheminement sont associés à une adresse de réseau informatique d'un serveur proxy, et dans lequel l'adresse de réseau informatique est associée à une politique de sécurité à appliquer à des communications destinées au serveur proxy ; et
l'envoi de l'adresse de réseau informatique du serveur proxy à l'ordinateur demandeur en réponse à la demande de résolution de nom de domaine pour acheminer des paquets destinés à l'adresse URL vers le serveur proxy et appliquer la politique de sécurité associée aux paquets acheminés.

13. Système selon la revendication 12, dans lequel l'ordinateur demandeur est configuré pour
coder dans la valeur codée l'adresse URL comportant la partie hôte et la partie non hôte, dans lequel la valeur codée a une syntaxe de nom de domaine valide, et
envoyer la valeur codée dans la demande de résolution de nom de domaine.

14. Système selon la revendication 12 dans lequel le serveur proxy est configuré pour bloquer des demandes reçues à l'adresse de réseau informatique.

15. Support non transitoire lisible par ordinateur et comportant des instructions stockées sur celui-ci qui, lorsqu'elles sont exécutées sur un processeur, effectuent une opération permettant de traiter des demandes de réseau informatique, l'opération comprenant :
la réception, en provenance d'un ordinateur demandeur (122), d'une valeur codée (116) dans une demande de résolution de nom de domaine, dans lequel la valeur codée a une syntaxe de nom de domaine valide ;
le décodage de la valeur codée dans une adresse URL (108') comportant une partie hôte et une partie non hôte ;
l'identification de critères d'acheminement (128) correspondant à une combinaison de la partie hôte de l'adresse URL et de la partie non hôte de l'adresse URL, dans lequel les critères d'acheminement sont associés à une adresse de réseau informatique d'un serveur proxy, et dans lequel l'adresse de réseau informatique est associée à une politique de sécurité à appliquer à des communications destinées au serveur proxy ; et
l'envoi de l'adresse de réseau informatique du serveur proxy à l'ordinateur demandeur en réponse à la demande de résolution de nom de domaine pour acheminer des paquets destinés à l'adresse URL vers le serveur proxy et appliquer la politique de sécurité associée aux paquets acheminés.
